# EUROPÄISCHE PATENTSCHRIFT

(11) **EP 1 053 417 B1**
(45) Veröffentlichungstag und Bekanntmachung des Hinweises auf die Patenterteilung: **27.08.2003**
(21) Anmeldenummer: 99962196.4
(22) Anmeldetag: 02.12.1999
(51) Int. Cl.: F16H 57/02, F16D 55/36, F16D 67/04

(54) **GETRIEBEBAUEINHEIT**
TRANSMISSION UNIT
COMPOSANT DE TRANSMISSION

(30) Priorität: 03.12.1998 DE 19855762
(43) Veröffentlichungstag der Anmeldung: 22.11.2000
(73) Patentinhaber: Voith Turbo GmbH & Co. KG, 89522 Heidenheim (DE)
(72) Erfinder: KÖRNER, Tillmann, D-89551 Zang (DE); SCHIEDER, Achim, Paul, D-92703 Krummenaab (DE)
(74) Vertreter: Dr. Weitzel & Partner
(86) Internationale Anmeldenummer: EP9909366
(87) Internationale Veröffentlichungsnummer: WO00032963

(56) Entgegenhaltungen:
- EP-A- 0 757 189
- GB-A- 1 411 361
- US-A- 5 653 321
- BUCKSCH M.: "ZF-5_Gang-Automatgetriebe für PKW (5HP 18)" VDI BERICHTE NR. 878,1991, Seiten 189-200, XP000879075 in der Anmeldung erwähnt
- NITESCU G.: "Viergangplanetengetriebe für Personenkraftwagen mit dem hydrodynamischen Drehmomentwandler in Leistungsverzweigung" AUTOMOBIL INDUSTRIE, Nr. 1, 1985, Seiten 597-602, XP000874737 in der Anmeldung erwähnt
- KLEMENT W: "DIE ENTWICKLUNG DER VOITH-DIWA-GETRIEBE" VERKEHR UND TECHNIK,DE,ERIC SCHMIDT VERLAG, BIELEFELD, Bd. 40, Nr. 7, 1987, Seiten 301-303, XP000874413 ISSN: 0340-4536 in der Anmeldung erwähnt

## Beschreibung

Die Erfindung betrifft eine Getriebebaueinheit, im einzelnen mit dne Merkmalen aus dem Oberbegriff des Anspruches 1.

Getriebebaueinheiten sind in einer Vielzahl von Ausführungen bekannt. Diese können als
a) mechanische Getriebebaueinheit
b) hydrodynamisch-mechanisches Verbundgetriebebaueinheit
ausgeführt sein. Hydrodynamisch-mechanische Verbundgetriebebaueinheiten sind beispielsweise aus den foglenden Druckschriften bekannt
- Buksch, M.: ZF-Fünfgang-Automatgetriebe für Pkw, VDI-Bericht 878 (1991)
- Mitesko, G.: Viergang-Planetengetriebe für Personenkraftwagen mit dem hydrodynamiscen Drehmomentenwandler in der Leistungsverzweigung, Automobilindustrie (1995) 5, Seite 597 - 691
- Klement, W.: Die Entwicklung der DIWA-Getriebe; Verkehr und Technik (1997) 7, Seite 301 - 303 - US-A 5 653 321, die dem Oberbegiff des Anspuchs 1 entspricht,
- GB-A-1 411 361
- EP-A-0 757 189

Die Getriebebaueinheiten, welche entweder nur rein mechanische Übertragungskomponenten besitzen oder aber auch aus einer Kombination eines hydrodynamischen Wandlers oder einer hydrodynamischen Kupplung mit einem nachgeschalteten mechanischen Getriebesatz bestehen, weisen in der Regel ein Gehäuse auf, welches hinsichtlich seiner Innenkontur der Gestaltung und Anbindung an das Gehäuse der einzelnen Getriebeelemente angepaßt ist und besitzen in der Regel Inneneinsätze, die den Innendurchmesser unerwünscht reduzieren. Die Betätigung der einzelnen Schalteinrichtungen erfolgt in der Regel durch Druckbeaufschlagung über hydraulische Kolben. Zur Rückstellung beim Lösen der Brems- oder Kupplungseinrichtungen sind bei diesen Systemen entweder jeweils eine große Tellerfeder vorgesehen, welche an einem Kolben wirksam wird, oder eine Vielzahl einzelner Druckfedern, die auf einem Trägerblech angeordnet sind und wiederum auf einen Kolben wirken. Die Druckfedern sind dabei immer in radialer Richtung betrachtet in einem Bereich außerhalb der radialen Erstreckung der Brems- bzw. Kupplungseinrichtungen angeordnet oder im Bereich des Außenumfanges bzw. erstrecken sich in axialer Richtung in einen Bereich, welcher radial innerhalb des durch die Kupplungs- bzw. Bremseinrichtungen vorgegebenen Bauraumes liegt. Die Abstützung erfolgt dabei entweder an Vorsprüngen der Gehäuseinnenwand, des weiteren wird der Gehäusedeckel zur Abstützung in axialer Richtung genutzt. Dies hat jedoch den Nachteil, daß aufgrund der auf den Gehäusedeckel wirkenden Kräfte eine Abdichtung nur mit zusätzlichem Aufwand möglich ist und der Gehäusedeckel ebenfalls in axialer Richtung gegenüber dem restlichen Getriebegehäuse gesichert werden muß. Das Grundgetriebe kann dann ohne Gehäusedeckel nicht mehr geprüft werden sondern nur im Einbauzustand. Des weiteren sind Winkeltriebe nur schwer an die Getriebeausgangswelle anschließbar, da diese in der Regel ebenfalls nicht kolbenfrei wirken.

Der Erfindung lag daher die Aufgabe zugrunde, eine Getriebebaueinheit zu entwickeln, bei welcher die genannten Nachteile vermieden werden. Im einzelnen ist auf eine einfachere Gehäusegestaltung sowie eine einfache Abdichtung und Befestigung des Gehäusedeckels am Getriebegehäuse abzustellen. Eine Prüfung des Getriebes soll auch in dem Zustand möglich sein, daß das Gehäuse geöffnet ist.

Die erfindungsgemäße Lösung wird durch die Kombination der Merkmale des Anspruches 1 charakterisiert. Vorteilhafte Ausgestaltungen sind in den Unteransprüchen wiedergegeben.

Erfindungsgemäß erfolgt die Anbindung der Vorrichtung zur Rückstellung der Betätigungselemente, insbesondere der Zylinder-Kolbeneinrichtung sowie einzelner Getriebeelemente ortsfest am Gehäuse mittels wenigstens zweier Mittel in Form von stabförmigen Führungselementen zur Anbindung von Getriebelementen in radialer Richtung bzw. in Umfangsrichtung. Diese erstrecken sich dabei im wesentlichen über einen Bereich, in welchem die zur Anbindung vorgesehenen Getriebeelemente angeordnet sind. Die stabförmigen Führungselemente sind dem zylindrischen Innenraum zugeordnet und in einem Bereich außerhalb von diesem angeordnet, wobei die Zuordnung derart erfolgt, daß die stabförmigen Führungselemente außerhalb eines Bereiches vorgesehen werden, welcher in Einbaulage des Getriebes betrachtet der größten Abmessung des zylindrischen Innenraumes in Höhenrichtung der Getriebebaueinheit entspricht.

Zwingend erforderlich sind lediglich zwei stabförmige Elemente, möglich sind jedoch auch vier. Die Anordnung erfolgt in diesem Fall im Querschnitt des Getriebegehäuses betrachtet in den Eckenbereichen, sich durch die Schnittmenge zwischen dem zylindrischen Innenraum und einem theoretisch erzeugbaren Quadrat mit einer Seitenabmessung größer oder gleich dem Durchmesser des Innenraumes beschreibbar ist, wobei das theoretisch erzeugbare Quadrat und der Innenraum identische Symmetrieachsen aufweisen. In diesem Fall werden insbesondere bei einem rechteckigen Gehäuse mit zylindrischem Innenraum die materialintensiven Eckenbereiche zur Aufnahme der Führungselemente genutzt. Die Anordunung der Führungselemente erfolgt damit außerhalb der Mittelsenkrechten. Die Führungselemente sind dabei in Ausnehmungen geführt, welche mit dem zylindrischen Innraum verbunden sind. Vorzugsweise erfolgt die Anordnung der Führungselemente jedoch immer symmetrisch. Dies bietet den Vorteil, daß der Fertigungsaufwand für die Getriebeelemente und das Getriebegehäuse minimiert werden kann, des weiteren der Montageaufwand, da nicht darauf geachtet werden muß, wie die einzelnen Ausnehmungen bzw. Durchgangsöffnungen an den Getriebeelementen zur Aufnahme der Führungselemente gestaltet werden müssen.

Als Getriebeelemente können beispielsweise Bremseinrichtungen in Form von Lamellenbremsen, Zwischenwände, Betätigungselemente für Brems- oder Kupplungseinrichtungen, beispielsweise in Form von Kolben, Lamellenträger oder ähnliches angesehen werden.

Die stabförmigen Elemente weisen vorzugsweise über ihre axiale Erstreckung einen gleichen bzw. konstanten Durchmesser auf. Dies bietet den Vorteil, daß die Montage unabhängig von der Einbaurichtung der stabförmigen Elemente erfolgen kann. Denkbar ist jedoch auch, je nach Gestaltung der Gesamtgetriebebaueinheit die Verwendung von stabförmigen Elementen mit unterschiedlichem Durchmesser über die axiale Erstreckung. In diesem Fall wird jedoch in der Regel eine Montage von zwei Seiten erfolgen.

Der Querschnitt des stabförmigen Führungselementes ist vorzugsweise kreisrund. Es sind jedoch auch Ausführungen mit viereckigem Querschnitt oder beliebigem Querschnitt denkbar.

Bezüglich der Lagerung der stabförmigen Führungselemente können folgende Varianten angewendet werden:
a) Lagerung am Gehäuse in Gehäusewandvorsprüngen
b) Lagerung in Zwischenwänden, welche auf die Führungselemente aufgefädelt werden
c) Fliegende Lagerung an einem Wandvorsprung oder einer Zwischenwand

Die Getriebebaueinheit kann als rein mechanische Getriebebaueinheit ausgeführt sein. In diesem Fall erstreckt sich jedes stabförmige Führungselement vorzugsweise über die gesamte axiale Erstreckung der Getriebebaueinheit. Bei Ausführung der Getriebebaueinheit als hydrodynamisch-mechanisches Verbundgetriebe ist das stabförmige Führungselement wenigstens mit einer axialen Länge versehen, welche der axialen Erstreckung des mechanischen Getriebeteils, bezogen auf die Gesamtgetriebebaueinheit, entspricht. Es ist jedoch immer erforderlich, daß die axiale Erstreckung der Führungselemente der axialen Erstreckung der an diesem abzustützenden Getriebeelementen entspricht.

Diese Aussagen gelten in Analogie auch für die Vorrichtungen zur Rückstellung der Betätigungselemente von Lamellen-, Kupplungs- und Bremseinrichtungen.

Zwischen den beiden reibflächentragenden Elementen, welche über ein reibflächentragendes Zwischenelement aneinander anpreßbar sind, ist wenigstens eine Federspeichereinrichtung vorgesehen, welche ebenfalls über die stabförmigen Führungselemente geführt wird und derart ausgelegt ist, daß bei Erzeugung des Reibschlusses zwischen den reibflächentragenden Elementen und dem Zwischenelement die Federspeichereinrichtung vorspannbar ist. Die Funktion von reibflächentragenden Elementen kann dabei sowohl von den Außen- als auch von den Innenlamellen übernommen werden. Aufgrund der Wirkung der Federspeichereinheit zwischen den einzelnen reibflächentragenden Elementen wirkt bei Entspannung des Betätigungselementes jeweils eine entgegengesetzt gerichtete Kraft auf die reibflächentragenden Elemente, so daß eine schnelle Trennung unter vollständiger Auflösung des Reibschlusses möglich wird. Die Federspeichereinrichtungen wirken somit mittelbar über die reibflächentragenden Elemente auf das Betätigungselement. Das Betätigungselement selbst kann beispielsweise als Kolben ausgeführt sein, der hydraulisch oder pneumatisch beaufschlagt werden kann. Diese Möglichkeit der Anordnung der Federspeichereinheiten zwischen den reibflächentragenden Elementen bietet den Vorteil, daß die Abmessungen der reibflächentragenden Elemente in radialer Richtung nicht mehr durch die Größe der Innenabmessungen des Getriebegehäuses unter Berücksichtigung des erforderlichen Bauraumes für die Vorrichtung zur wenigstens mittelbaren Rückstellung von Betätigungselementen abhängig ist. Die Anordnung von Federspeichereinheiten zwischen den reibschlüssig über ein Zwischenelement miteinander verbindbaren reibflächentragenden Elementen bietet auch den Vorteil einer platzsparenden Ausführung der Rückstellvorrichtung in axialer Richtung, welche sich wiederum auf die Getriebelänge beim Einsatz der Bremseinrichtungen in Lamellenbauart in einem Getriebe niederschlägt. Bezüglich der Anordnung der Federeinheiten zwischen den reibflächentagenden Elementen sind eine Vielzahl von Möglichkeiten denkbar:
a) Anordnung von Federeinheiten zwischen jedem der beiden benachbarten reibflächentragenden Elementen;
b) Anordnung der Federeinheiten in Kraftflußrichtung zwischen den reibflächentragenden Elementen im Bereich der Krafteinleitung (im Bereich der jeweils außenliegenden reibflächentragenden Elemente bezogen auf die Einbaulage der Bremseinrichtung in einer Getriebebaueinheit);
c) Anordnung der Federeinheit zwischen zwei einander benachbarten reibflächentragenden Elementen bezogen auf die axiale Erstreckung der Bremseinrichtung im Mittenbereich dieser;
d) Anordnung gemäß b) in Kombination mit c).

Als Federspeichereinheiten finden vorzugsweise Federelemente Verwendung, welche eine Kennliniencharakteristik mit einem im wesentlichen konstanten Kraftverlauf über einen bestimmten Federweg aufweisen. Vorzugsweise werden daher Tellerfedern verwendet. Die Ausführung der Federeinheiten als Wellenfederring ist ebenfalls denkbar. Die verwendeten Betätigungseinrichtungen können als Zylinderkolbeneinrichtungen ausgeführt werden, welche hydraulisch oder pneumatisch beaufschlagbar sind. Entsprechend der Anordnung des Kolbens für die Rückstellvorrichtung über die reibflächentragenden Elemente, insbesondere Lamellen am Kolben, entweder im Bereich der Kolbenfläche oder außerhalb der Kolbenfläche wirksam. Hinsichtlich der Gestaltung des Kolbens werden Ausführungen mit
a) einem Kolben
b) einer Vielzahl von Kolben
unterschieden. Die zugehörigen Zylinder können dabei von einem zylindertragenden Element oder einer Vielzahl von zytindertragenden Elementen gebildet werden. Diese Möglichkeit der Kolbenrückstellung bietet den Vorteil eines minimalen Bauraumbedarfes in radialer sowie axialer Richtung. In Kombination mit der erfindungsgemäßen Lösung ist die Möglichkeit der Schaffung einer Getriebebaueinheit mit der Möglichkeit hoher Momentenübertragung bei gleichbleibender Baugröße oder verringerter Baugröße gegeben.

Die erfindungsgemäße Lösung wird nachfolgend anhand von Figuren erläutert. Darin ist folgendes dargestellt:
Fig. 1 verdeutlicht anhand eines speziellen Getriebetyps im Axialschnitt die erfindungsgemäße Lösung;
Fig. 2 zeigt eine Ansicht A-A entsprechend Fig. 1.

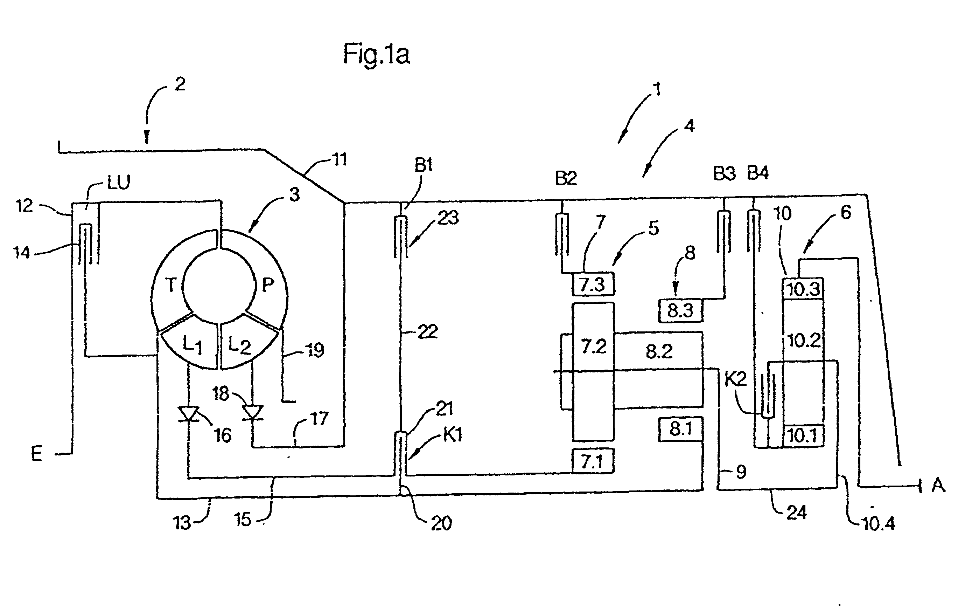

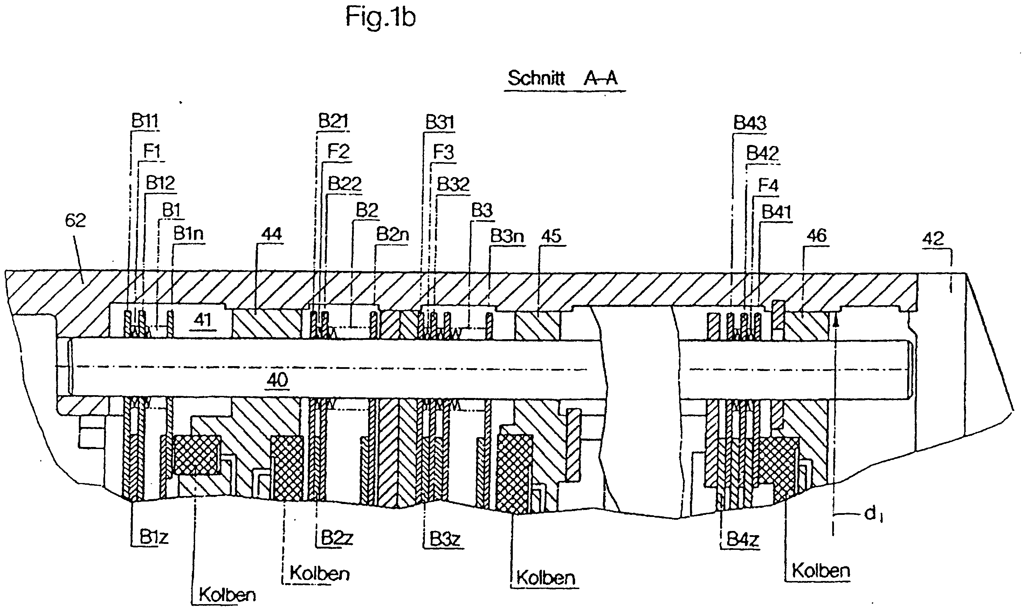

Die Figur 1 verdeutlicht beispielhaft anhand eines bestimmten Getriebetyps im Axialschnitt die erfindungsgemäße Lösung. Die Getriebebaueinheit ist als hydrodynamisch-mechanisches Verbundgetriebe 1 ausgeführt.

Das hydrodynamisch-mechanische Verbundgetriebe 1 umfaßt einen ersten hydrodynamischen Getriebeteil 2 in Form eines hydrodynamischen Drehzahl-/Drehmomentenwandlers 3 und einen zweiten mechanischen Getriebeteil 4. Der mechanische Getriebeteil 4 umfaßt einen mechanischen Drehzahl-/Drehmomentenwandler 5 und einen, diesem in Kraftflußrichtung im Traktionsbetrieb nachgeschalteten Gruppensatz. Der mechanische Drehzahl-/Drehmomentenwandler 5 ist als abgewandelter Ravigneaux-Planetenradsatz ausgeführt. Dieser umfaßt einen ersten Planetenradsatz 7 und einen zweiten Planetenradsatz 8, welche einen gemeinsam genutzten Planetenradträger 9 aufweisen. Dieser stellt die Kopplung zwischen einem Getriebeelement des ersten und des zweiten Planetenradsatzes dar. Der erste Planetenradsatz 7 umfaßt ein Sonnenrad 7.1, Planetenräder 7.2 und ein Hohlrad 7.3. Der zweite Planetenradsatz 8 umfaßt ein Sonnenrad 8.1, Planetenräder 8.2 und ein Hohlrad 8.3.

Der Gruppensatz 6 umfaßt wenigstens einen Planetenradsatz 10, welcher ein Sonnenrad 10.1, Planetenräder 10.2, ein Hohlrad 10.3 und einen Steg 10.4 aufweist.

Der hydrodynamisch-mechanische Drehzahl-/Drehmomentenwandler 3 umfaßt ein Turbinenrad T, ein Pumpenrad P, ein erstes Leitrad L1 und ein zweites Leitrad L2 und ist durch ein Gehäuse 11 abgedeckt. Das Pumpenrad P ist mit einer Getriebeeingangswelle E, welche wenigstens mittelbar mit einer, dem Antrieb dienenden Antriebsmaschine koppelbar ist, vorzugsweise mit einem Schwungrad 12 einer Verbrennungskraftmaschine derart verbunden, daß die Kraft vom Schwungrad 12 auf das Pumpenrad P übertragen wird. Das Turbinenrad T ist mit einer Turbinenradwelle 13 drehfest verbunden. Um die Vorteile der hydrodynamischen Drehmomentenübertragung mit Überbrückungskupplung zu nutzen, welche im folgenden wären:
- selbsttätige stufenlose Einstellung des Verhältnisses zwischen der Anund Abtriebsdrehzahl entsprechend der Belastung auf der Abtriebsseite
- Zurverfügungstehen des maximalen Drehmomentes für einen Anfahrvorgang mit hoher Beschleunigung;
- Möglichkeit der Wärmeabfuhr durch Fremd- oder Oberflächenkühlung
- Trennung des hydrodynamischen Drehzahl-/Drehmomentenwandlers vom Abtrieb, insbesondere vom Fahrzeug bei kleinen Antriebsdrehzahlen und Übertragung eines geringen Restmomentes, so daß ein Abwürgen der Antriebsmaschine von der Abtriebsseite her nicht möglich ist
- verschleißfreie Leistungsübertragung
und gleichzeitig die Nachteile einer hydrodynamischen Leistungsübertragung, welche im wesentlichen in einem oftmals nicht ausreichend erzielbaren Wirkungsgrad besteht, um mit einem hydrodynamischen Getriebe allein arbeiten zu können, da Verlustleistungsanteile, die sich aus Reibungs- und Stoßverlusten zusammensetzen, die übertragbare Gesamtleistung vermindern und die erzielten Wandlungsbereiche für den Fahrzeugeinsatz oft nicht ausreichend sind, wird der hydrodynamische Drehzahl-/Drehmomentenwandler 3 nur in den unteren Gangstufen, vorzugsweise nur während des Anfahrvorganges, zur Leistungsübertragung genutzt. Zur Verbesserung des Übertragungswirkungsgrades wird daher der hydrodynamische Drehzahl-/Drehmomentenwandler 3 aus der Leistungsübertragung herausgenommen, vorzugsweise durch Überbrückung. Zu diesem Zweck ist zwischen dem Turbinenrad T und dem Schwungrad 12 bzw. der Getriebeeingangswelle eine Überbrückungskupplung 14 angeordnet.

Das erste Leitrad L1 ist auf der Turbinenseite zwischen dem Turbinenrad T und dem Pumpenrad P angeordnet und durch ein Lager reversibel gelagert. Das erste Leitrad L1 ist mit einer ersten Leitradwelle 15 drehfest verbindbar, wobei zwischen dem ersten Leitrad L1 und der Leitradwelle 15 ein Freilauf 16 vorgesehen ist, welcher derart ausgelegt wird, daß er ein Moment auf die erste Leitradwelle 15 überträgt, wenn sich das erste Leitrad L1 in umgekehrter Richtung, d.h. entgegengesetzter Drehrichtung, zum Turbinenrad T dreht und welcher leerläuft, wenn das erste Leitrad L1 in normaler Richtung, d.h. in gleicher Rotationsrichtung wie das Turbinenrad T rotiert. Das zweite Leitrad L2 ist zwischen dem Turbinenrad T und dem Pumpenrad P auf der Pumpenseite angeordnet und über eine zweite Leitradwelle 17 mit dem Gehäuse 11 koppelbar. Zwischen dem zweiten Leitrad L2 und der zweiten Leitradwelle 17 ist ein zweiter Freilauf 18 angeordnet, mittels welchem das zweite Leitrad L2 mit der zweiten Leitradwelle 17 gekoppelt werden kann, jedoch nur dann, wenn sich das zweite Leitrad L2 in entgegengesetzter Richtung zum Turbinenrad T dreht.

Das Pumpenrad P ist mit einer Pumpenradwelle 19 drehfest verbunden, welche über ein Lager im Gehäuse 11 drehbar gelagert ist.

Zur Realisierung der einzelnen Gangstufen und Auslegung der einzelnen Gänge sind den einzelnen Elementen des hydrodynamisch-mechanischen Verbundgetriebes 1 Schaltelemente zugeordnet. Zwischen dem hydrodynamischen Getriebeteil 2 und dem mechanischen Getriebeteil 4 sind eine erste Kupplungseinrichtung K1 und eine erste Bremseinrichtung B1 vorgesehen.

Das Turbinenrad T und die mit diesem drehfest koppelbare Turbinenradwelle 13 ist mit dem Sonnenrad 8.1 des zweiten Planetenradsatzes 8 des mechanischen Drehzahl-/Drehmomentenwandlers 5 gekoppelt. Vorzugsweise sind das Turbinenrad T und das Sonnenrad 8.1 des zweiten Planetenradsatzes 8 auf einer gemeinsamen Welle, hier der Turbinenradwelle 13, angeordnet. die Turbinenradwelle 13 trägt dabei auch die Kupplungsscheibe 20 der ersten Kupplung K1. Die erste Kupplung K1 weist des weiteren eine Kupplungsabdeckung 21 auf, welche mit der ersten Leitradwelle 15 gekoppelt ist. Des weiteren ist das erste Leitrad L1 über die erste Leitradwelle 15 mit dem Sonnenrad 7.1 des ersten Planetenradsatzes 7 des mechanischen Drehzahl-/Drehmomentenwandlers 5 verbindbar. Die Kupplungsabdeckung 21 ist dabei vorzugsweise einstückig mit der ersten Leitradwelle 15 verbunden. Die erste Leitradwelle 15 ist als Hohlwelle ausgeführt, welche die Leitradwelle 13 in Umfangsrichtung umschließt.

Mit der Kupplungsabdeckung 21 der ersten Kupplung K1 ist ein vorzugsweise scheibenförmiges Element 22 verbunden und bildet mit dieser eine bauliche Einheit, an deren äußerem Umfangsbereich 23 die erste Bremseinrichtung B1 angreifen kann. Die erste Bremseinrichtung B1 dient dabei zum Festsetzen des ersten Leitrades L1 über die Leitradwelle 15 und/oder des ersten Sonnenrades 7.1 des ersten Planetenradsatzes 7 des mechanischen Drehzahl-/Drehmomentenwandlers 5. Weitere Schaltelemente, hier die Schaltelemente in Form von Bremseinrichtungen B2 und B3, sind den einzelnen Planetenradsätzen 7 bzw. 8 des mechanischen Drehzahl-/Drehmomentenwandlers 5 zugeordnet. Im dargestellten Fall ist das zweite Bremselement B2 dem Hohlrad 7.3 des ersten Planetenradsatzes 7 und das dritte Bremselement B3 dem Hohlrad 8.3 des zweiten Planetenradsatzes 8 des mechanischen Drehzahl-/Drehmomentenwandlers 5 zugeordnet. Die Kopplung des mechanischen Drehzahl-/Drehmomentenwandlers 5 mit der Getriebeeingangswelle E über den hydrodynamischen Drehzahl-/Drehmomentenwandler 3 bzw. dessen Überbrückung über die Überbrückungskupplung 14 erfolgt dabei durch Kopplung des Turbinenrades T bzw. der Turbinenradwelle 13 mit einem ersten Getriebeelement des mechanischen Drehzahl-/Drehmomentenwandlers 5 und des ersten Leitrades L1 mit einem weiteren zweiten Getriebeelement des mechanischen Drehzahl-/Drehmomentenwandlers 5. Als erstes Getriebeelement des mechanischen Drehzahl-/Drehmomentenwandlers 5 fungiert hier das Sonnenrad 8.1 des zweiten Planetenradsatzes 8. Als zweites Getriebeelement fungiert das Sonnenrad 7.1 des ersten Planetenradsatzes 7. Die mit den beiden Sonnenrädern 7.1 bzw. 8.1 gekoppelten Wellen, hier die erste Leitradwelle 15 und die Turbinenradwelle 13, fungieren als Eingangswellen des mechanischen Drehzahl-/Drehmomentenwandlers 5. Ein weiteres drittes Getriebeelement ist über den Gruppensatz 6 mit der Getriebeausgangswelle A verbunden. Als drittes Getriebeelement fungiert der Planetenträger 9, welcher von beiden Planetenradsätzen 7 und 8 gemeinsam genutzt wird. Das dritte Getriebeelement des mechanischen Drehzahl-/Drehmomentenwandlers 5 ist mit dem Eingang, welcher von einem ersten Getriebeelement des Gruppensatzes 6 gebildet wird, verbunden. Vorzugsweise wird diese Verbindung über eine drehfeste Kopplung vom dritten Getriebeelement des mechanischen Drehzahl-/Drehmomentenwandlers 5 und ersten Getriebeelement des Gruppensatzes 6 realisiert. Beide sind vorzugsweise auf einer gemeinsamen Verbindungswelle 24 angeordnet. Das erste Getriebeelement des Gruppensatzes 6 wird von dessen Planetenträger 10.4 gebildet. Ein zweites Getriebeelement des Gruppensatzes 6 ist drehfest mit der Getriebeausgangswelle A des hydrodynamisch-mechanischen Verbundgetriebes 1 verbunden. Als zweites Getriebeelement fungiert im dargestellten Fall das Hohlrad 10.3 des Planetenradsatzes 10 des Gruppensatzes 6. Während der mechanische Drehzahl-/Drehmomentenwandler 5 in Kombination mit dem hydrodynamischen Drehzahl-/Drehmomentenwandler 3 der Realisierung von drei Gangstufen dient, können durch Kombination des hydrodynamischen Drehzahl-/Drehmomentenwandlers 3, des mechanischen Drehzahl-/Drehmomentenwandlers 5 mit dem Gruppensatz 6 im dargestellten Fall sechs Gangstufen realisiert werden. Zu diesem Zweck sind dem Gruppensatz 6 jeweils eine weitere Kupplungseinrichtung, hier die zweite Kupplungseinrichtung K2 und eine weitere Bremseinrichtung, hier die vierte Bremseinrichtung B4, zugeordnet. Das vierte Bremselement dient dabei der Feststellung des Sonnenrades 10.1 des Gruppensatzes 6. Die zweite Kupplungseinrichtung K2 ermöglicht die starre Kopplung zwischen dem Planetenträger 10.4 und dem Sonnenrad 10.1 des Planetenradsatzes 10 des Gruppensatzes 6.

Aus dem Axialschnitt der Getriebebaueinheit 1 wird ersichtlich, wie einzelne Getriebeelemente, welche am Gehäuse befestigt oder gelagert werden, in der erfindungsgemäßen Art und Weise am Gehäuse 11 befestigt werden. Die einzelnen Bremseinrichtungen B1 bis B4 sind in Lamellenbauart ausgeführt. Diese umfassen wenigstens jeweils zwei reibflächentragende Elemente, welche über ein reibflächentragendes Zwischenelement miteinander reibschlüssig verbunden werden. Die reibflächentragenden Elemente sind dabei für die einzelnen Bremseinrichtungen wie folgt bezeichnet:
B1: B₁₁, B₁₂, B₁ₙ
B2: B₂₁, B₂₂, B₂ₙ
B3: B₃₁, B₃₂, B₃ₙ
B4: B₄₁, B₄₂, B₄ₙ

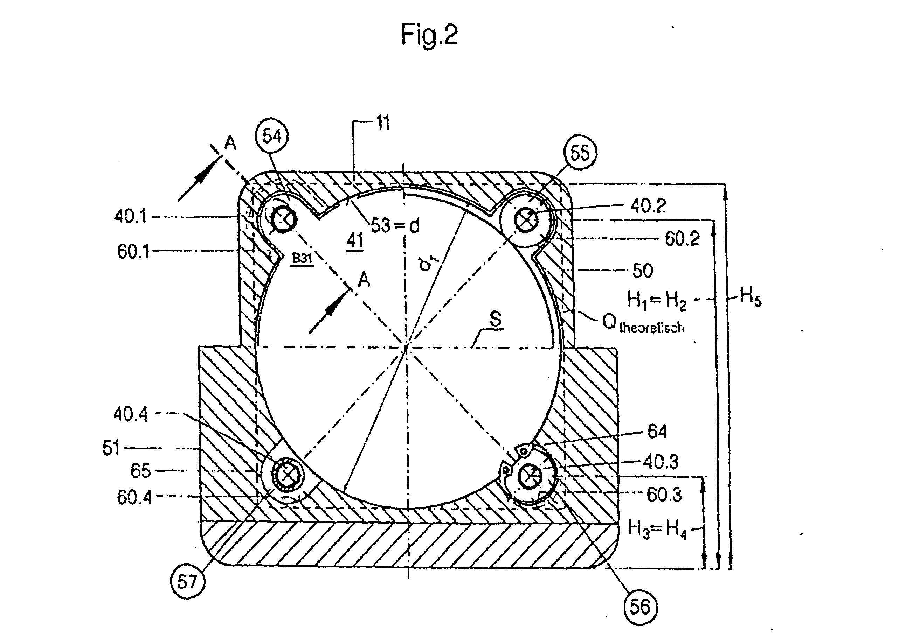

Die Zwischenelemente sind jeweils mit B_{1z}, B_{2z}, B_{3z} und B_{4z} bezeichnet. Die reibeflächentragenden Elemente B₁ₙ bis B₄ₙ bilden dabei die Außenlamellen. Zur Umwandlung der Bremsenergie in Wärme sind die Außenlamellen feststehend, während die Innenlamellen, welche von den Zwischenelementen B_{1zn} bis B_{4zn} gebildet werden, mit dem abzubremsenden Getriebeelement gekoppelt sind. Die ortsfeste Festlegung der Außenlamellen erfolgt über die stabförmigen Führungselemente 40. Diese erstrecken sich vorzugsweise wenigstens über die axiale Erstreckung des mechanischen Getriebeteiles 4. Das Gehäuse 11 weist in diesem Abschnitt im wesentlichen über die axiale Erstreckung einen konstanten Innendurchmesser d₁ auf. Vorzugsweise sind, wie in der Fig. 2 dargestellt, vier stabfömige Führungselemente 40.1 bis 40.4 vorgesehen, welche vorzugsweise mit gleichbleibendem Abstand in Umfangsrichtung zueinander im Getriebegehäuse angeordnet sind. Das Getriebegehäuse 11 selbst ist wenigstens in dem Bereich, wecher den mechanischen Getriebeteil 4 aufnimmt, derart ausgestaltet, daß dieses einen im wesentlichen zylindrischen Innenquerschnitt aufweist. Vorzugsweise weist das Getriebegehäuse in axialer Richtung betrachtet im Bereich des mechanischen Getriebeteiles 4 einen im wesentlichen konstanten Innendurchmesser auf. Der Innendurchmesser ist derart ausgelegt, daß im wesentlichen die rotierenden Getriebelemente und Bauteile frei rotieren können unter Ausnutzung des maximal möglichen Bauraums. Das Führungselement 40 ist vorzugsweise einstückig ausgeführt, kann jedoch auch aus mehreren Teilstücken bestehen. Im unmontierten Zustand des mechanischen Getriebeteils 4 ist der Innenraum, welcher hier mit 41 bezeichnet ist, im wesentlichen leer. Zur Montage werden zuerst die stabförmigen Führungselemente in die entsprechenden Positionen verbracht bzw. in entsprechender Weise am Getriebegehäuse eingehangen und die einzelnen Getriebeelemente werden hintereinander entsprechend der gewünschten Anordnung auf diesen Führungselementen aufgefädelt. Alle Komponenten des mechanischen Getriebeteiles können von der Trennstelle T bis zum Gehäusedeckel 42 nacheinander bei der Montage aufgefädelt werden. Dies bietet den Vorteil, daß mit der Auffädeltechnik und dem konstanten Innendurchmesser die einzelnen Bauelemente im mechanischen Getriebeteil 4 untereinander vertauscht werden können und sich somit auf einfache Art und Weise bei gleichbleibendem Getriebegehäuse bzw. gleichen Abmessungen der Getriebebaueinheit Mittenabtriebe oder Allradabtriebe verwirklichen lassen. Die Montage erfolgt nur von einer Seite und zwar im dargestellten Fall von seiten des Deckels 42. Die Montage gestaltet sich einfach und ist innerhalb kürzester Zeit realisierbar. Die einzelnen Planetenradsätze können hinsichtlich ihrer Anordnung untereinander vertauscht werden. Des weiteren sind unterschiedliche Abtriebsvarianten realisierbar.

Die axiale Festlegung der einzelnen Getriebeelemente erfolgt dabei durch Sicherungsmittel, beispielsweise in Form von Sicherungsringen oder Anschlägen. Außer den Außenlamellen werden auch sogenannte Zwischenwände 44, 45, 46 und 47 geführt. Des weiteren erfolgt ebenfalls über die Führungselemente 40.1 bis 40.4 die ortsfeste Anordnung bzw. Abstützung von Getriebeelementen, beispielsweise Lamellenträgern oder ähnlichem.

Die Fig. 2 verdeutlicht einen Querschnitt entsprechend einer Ansicht A-A gemäß Fig. 1. Ersichtlich sind das Getriebegehäuse 11, welches im dargestellten Fall in zwei Teilbereiche 50 und 51 unterteilt werden kann. Der erste Teilbereich 50 bildet dabei den in Einbaulage oberen Gehäuseteil, der zweite Teilbereich 51 den in Einbaulage unterhalb der Getriebesymmetrieachse S angeordneten Gehäuseteil. Das Getriebegehäuse 11 weist, wie in den Ausführungen zu Fig. 1 bereits erläutert, eine im wesentlichen zylindrische Innenkontur 53 auf, welcher einen Innenraum 41 umschließt. Die Innenkontur 53 kann durch den Durchmesser d₁ beschrieben werden. Dieser erstreckt sich, wie in den Ausführungen zu Fig. 1 bereits ausführlich erläutert, im wesentlichen über die gesamte axiale Erstreckung des mechanischen Getriebeteiles 4. Es sind Mittel zur Aufnahme und Anbindung der Getriebelemente in radialer Richtung und zur Sicherung gegenüber Verdrehung in Umfangsrichtung zugeordnet. Diese Mittel werden von den Führungselementen 40.1 bis 40.4 gebildet. Diese sind dem durch den Durchmesser d₁ beschriebenen Innenumfang 53 derart zugeordnet, daß diese in Einbaulage der Getriebebaueinheit 1 auf einer Höhe H1 bis H4 angeordnet sind, welche bezüglich der Abmessungen kleiner der durch die maximale Erstreckung der Innenkontur 53 in Einbaulage in Höhenrichtung beschriebenen Abmessung H5 ist. Die Führungselemente sind daher, wie in der Fig. 2 verdeutlicht, in den Eckenbereichen 54, 55, 56 bzw. 57 des Gehäuses 11 angeordnet, wobei die Eckenbereiche sich durch eine Zuordnung eines Quadrates bzw. Rechteckes zur Innenkontur 53 beschreiben lassen. Die Eckenbereiche 54 bis 57 werden dabei in Einbaulage durch Zuordnung des Quadrates Q_{theoretisch} beschrieben, in dem der von der Innenkontur 53 umschriebene Durchmesser d₁ in dem Quadrat angeordnet ist und beide, das theoretisch zur Betrachtung herangezogene Quadrat Q_{theoretisch} sowie der Innendurchmesser d der Innenkontur 53 des Gehäuses die gleichen Symmetrieachsen S1 bzw. S2 aufweist. Zur Aufnahme der Führungselemente sind entsprechende Ausnehmungen im Gehäuse vorgesehen. Diese sind hier für die einzelnen Führungselemente jeweils mit 60.1 bis 60.4 bezeichnet. Die Anordnung dieser Ausnehmungen 60.1 bis 60.4 im Gehäuse erfolgt dabei außerhalb eines Bereiche am Getriebegehäuse, welcher durch die maximale Erstreckung der Innenkontur von der jeweiligen Symmetrieachse in Höhen- bzw. Breitenrichtung der Getriebebaueinheit beschrieben wird. D. h., daß bei Verwendung einer im wesentlichen rechteckigen Gehäuseaußenform und einer im wesentlichen zylindrischen Gehäuseinnenkontur 53 nur die materialintensiven Eckenbereiche 54 bis 57 des Gehäuses 11 zur Aufnahme der Führungselemente 40.1 bis 40.4 genutzt werden. Zusätzlicher Bauraum in Höhen- oder Breitenrichtung wird nicht benötigt. Der Innenraum 41 kann mit maximal möglichen Durchmesser d₁ gestaltet werden, da in Höhen- und Breitenrichtung kein zusätzlicher Bauraum für die Anbindung der Getriebeelemente vorgesehen werden muß. Das Getriebegehäuse 11 selbst kann in den von den eingearbeiteten Ausnehmungen 60.1 bis 60.4 freien Bereichen mit relativ dünner Gehäusewand ausgestattet werden. Die Ausnehmungen 60.1 bis 60.3 bilden sogenannte Eingriffstaschen, in welche die Führungselemente 40.1 bis 40.4 eingeführt werden können. Vorzugsweise ist jeweils in axialer Richtung, wie in der Fig. 1 verdeutlicht, eine Möglichkeit zum Einhängen bzw. zur fliegenden Lagerung der Führungselemente 40.1 bis 40.4 vorgesehen. Diese ist in der Fig. 1 mit 62 bezeichnet. Zusäztlich können die Führungselemente auch in den Zwischenwänden, welche sich über den gesamten Innenraum in radialer Richtung erstrecken, geführt werden. Die Fig. 2 verdeutlicht beispielsweise die Anbindung des reibflächentragenden Elementes B₃₁. Für die Anbindung an den Führungselementen 40.1 bis 40.4 sind in der Fig. 2 vier mögliche Ausführungsvarianten schematische vereinfacht dargestellt. Vorzugsweise werden für die axiale Festlegung eines Elementes gleiche axiale Sicherungselemente verwendet. Am Führungselement 40.1 erfolgt die axiale Sicherung durch Verwenden von Einschiebeblechen, im Führungselement 40.3 mittels eines Sicherungsringes 64 und am Führungselement 40.4 durch Hülsen 65. Zum Auffädeln der einzelnen Getriebeelemente auf die stabförmigen Führungselemente 40.1 bis 40.4 weisen diese entsprechende Durchgangsöffnungen auf. Vorzugsweise sind die Getriebeelemente derart ausgeführt, daß diese zusätzlich zu ihrem kreisrunden Querschnitt Vorsprünge aufweise, an welchen die Ausnehmungen bzw. Durchgangsöffnungen eingearbeitet sind. Dies bietet den Vorteil, daß der übrige Bauraum, insbesondere der zylindrische Innenraum 41 im wesentlichen voll ausgenutzt werden kann und keine zusätzlichen störenden Elemente enthält. Insbesondere bei Anbindung der Außenlamellen entsprechend der Fig. 2 kann zur Kraftübertragung eine Fläche genutzt werden, welche im wesentlichen der durch den Innendurchmesser d₁ beschreibbaren Fläche entspricht.

Vorzugsweise erfolgt die Anbindung der Getriebeelemente in allen vier möglichen Eckenbereichen 53 bis 57. Die Führungselemente 40.1 bis 40.4 und die entsprechenden Vorsprünge an den Getriebeelementen sind dementsprechend mit gleichbleibendem Abstand betrachtet in Umfangsrichtung bezogen auf die Innenkontur 53 der Getriebebaueinheit 1 angeordnet. Es besteht jedoch auch die Möglichkeit, eine im wesentlichen symmetrische Anordnung zu finden, welche von der Anordnung im Eckenbereich abweicht. Des weiteren ist es nicht zwingend erforderlich, eine Anbindung in allen vier Eckenbereichen vorzunehmen. Zur Verdrehsicherung in Umfangsrichtung sind wenigstens zwei Führungselemente erforderlich.

Vorzugsweise sind die Bremseinrichtungen B1 bis B4 mit einer Vorrichtung zur Rückstellung von Betätigungselementen ausgestattet. Zu diesem Zwecke sind jeweils zwischen zwei einander benachbarten reibflächentragenden Elementen eine Federspeichereinheit vorgesehen, welche ebenfalls von den Führungselementen, entsprechend Fig. 1 dem Führungselement 40.1 geführt und bei Erzeugung des Reibschlusses zwischen den Reibflächentragenden Elementen und dem Zwischenelement vorspannbar ist. Im dargestellten Fall sind zwischen den reibflächentragenden Elementen der Bremseinrichtung B1 eine Federspeichereinheit F1 bzw. B2, F2, B3 - F3 und B4, F4 vorgesehen. Die Federspeichereinheiten sind dabei immer außerhalb der reibflächentragenden Zwischenelemente angeordnet, so daß diesbezüglich keinerlei Kollision zwischen den Federspeichereinheiten und den reibflächentragenden Zwischenelementen auftreten kann. Vorzugsweise sind wenigstens zwischen den in Kraftflußrichtung ersten beiden einander benachbarten reibflächentragenden Elementen einer Bremseinrichtung entsprechende Federspeichereinrichtungen angeordnet. Diese Ausführung bietet den Vorteil, daß aufgrund der Wirkung der Federspeichereinheit zwischen den einzelnen reibflächentragenden Elementen auf diese jeweils entgegengesetzt gerichtete Kräfte wirken, so daß eine schnelle Trennung unter vollständiger Auflösung des Reibschlusses möglich wird. Die Federspeichereinrichtung wirkt somit wenigstens mittelbar über die reibflächentragenden Elemente auf das Betätigungselement, insbesondere einen Kolben. Die Betätigungselemente, d. h. die Kolben, können beispielsweise hydraulisch oder pneumatisch beaufschlagt werden. Die einzelnen reibflächentragenden Elemente und die Zwischenelemente müssen sich dann nicht mehr freikleiden. Es erfolgt immer eine Zwangstrennung zumindest in dem Bereich, in welchem die Federspeichereinheit angeordnet ist.

Die Anordnung der Federspeichereinheiten zwischen den einzelnen reibflächentragenden Elementen bietet des weiteren den Vorteil, daß die Abmessungen der reibflächentragenden Elemente in radialer Richtung nicht mehr durch die Größe der Innenabmessungen des Getriebgehäuses unter Berücksichtigung des erforderlichen Bauraumes für die Vorrichtung zur wenigstens mittelbaren Rückstellung von Betätigungselementen abhängig ist. Die Anordnung von Federspeichereinheiten zwischen den reibschlüssig über ein Zwischenelement miteinander verbindbaren reibflächentragenden Elementen bietet des weiteren den Vorteil einer platzsparenden Ausführung der Rückstellvorrichtung in axialer Richtung, welche sich wiederum auf die Getriebebaulänge positiv auswirkt.

## Patentansprüche

1. Getriebebaueinheit
1.1 mit einem Getriebegehäuse;
1.2 mit einem dem Gehäuse in Einbaulage in axialer Richtung zugeordneten Gehäusedeckel;
1.3 das Getriebegehäuse weist einen im wesentlichen zylindrischen Innenraum zur Aufnahme einzelner Getriebeelemente auf;
1.4 mit einer Vorrichtung zur wenigstens mittelbaren Rückstellung von Betätigungselementen kraftschlüssiger Kupplungs- und/oder Bremseinrichtungen mit wenigstens zwei reibflächentragenden Elementen, deren Reibflächen über ein weiteres reibflächentragendes Zwischenelement miteinander reibschlüssig verbindbar sind;
1.5 es sind wenigstens zwei Mittel zur Anbindung eines einzelnen Getriebeelementes ortsfest gegenüber dem Gehäuse und/oder der Vorrichtung zur wenigstens mittelbaren Rückstellung der Betätigungselemente kraftschlüssiger Kupplungs- und/oder Bremseinrichtungen vorgesehen; **gekennzeichnet durch** die folgenden Merkmale:
1.6 die Mittel sind dem **durch** den Durchmesser beschriebenen Innenumfang des Innenraumes derart zugeordnet, dass diese in Einbaulage der Getriebebaueinheit auf einer Höhe angeordnet sind, welche bezüglich der Abmessungen kleiner ist als die **durch** die maximale Erstreckung der Innenkontur in Einbaulage in Höhenrichtung beschriebene Abmessung H5 ;
1.7 die Mittel umfassen mit dem Innenraum verbundene Ausnehmungen in der Getriebegehäusewand, welche zur Führung dazu komplementärer Vorsprünge an den Getriebeelementen und/oder der Vorrichtung zur wenigstens mittelbaren Rückstellung der Betätigungselemente der kraftschlüssigen Kupplungs- und/oder Bremseinrichtungen ausgebildet sind oder in welcher sich in axialer Richtung der Getriebebaueinheit streckende stabförmige Elemente angeordnet sind, auf welche die Getriebeelemente und/oder die Vorrichtung zur wenigstens mittelbaren Rückstellung der Betätigungselemente aufsteckbar oder einsteckbar sind;
1.8 der Gehäusedeckel ist frei von Axialkraftwirkung **durch** die Vorrichtung zur wenigstens mittelbaren Rückstellung der Betätigungselemente und/oder der Getriebeelemente.

2. Getriebebaueinheit nach Anspruch 1, **dadurch gekennzeichnet, daß** der zylindrische Innenraum über die gesamte axiale Erstreckung in Einbaulage einen im wesentlichen konstanten Durchmesser aufweist.

3. Getriebebaueinheit nach einem der Ansprüche 1 oder 2, **dadurch gekennzeichnet, daß** die Zuordnung der Mittel in den Eckenbereichen des Gehäuses erfolgt, welches durch die Schnittmenge von zylindrischem Innenraum und einem theoretisch bildbaren Qudradt Qtheoretisch mit einer Seitenabmessung >/= dem Durchmesser des zylindrischen Innraumes beschreibbar ist, wobei das theoretisch bildbare Quadrat und der Innenraum identische Symmetrieachsen aufweisen.

4. Getriebebaueinheit nach Anspruch 3, **dadurch gekennzeichnet, daß** die Mittel in allen vier Eckenbereichen mit im wesentlichen in Umfangsrichtung des innenraumes betrachtet konstanten Abstand zueinander angeordnet sind.

5. Getriebebaueinheit nach einem der Ansprüche 1 bis 4, **dadurch gekennzeichnet, daß** den einzeinen Getriebeelementen und/oder der Vorrichtung zur Rückstellung der Betätigungselemente Mittel zur Begrenzung und/oder Vermeidung axialer Bewegbarkeit geordnet sind.

6. Getriebebaueinheit nach einem der Ansprüche 1 bis 5, **gekennzeichnet durch** die folgenden Merkmale:
6.1 mit einem mechanischen Getriebeteil und einem hydrodynamischen Getriebeteil;
6.2 der zylindrische Innenraum des Getriebegehäuses weist in aoialer Richtung betrachtet wenigstens über den Bereich des mechanischen Getriebeteils einen konstanten Durchmesser auf.

## Claims

1. A transmission unit
1.1 comprising a transmission housing,
1.2 comprising a housing cover associated with the housing in the fitted state in the axial direction,
1.3 the transmission housing has a substantially cylindrical interior space for receiving individual transmission elements,
1.4 comprising a device for at least indirectly resetting actuating elements of non-positive coupling and/or braking arrangements having at least two friction surface-carrying elements, the friction surfaces of which are connectable to one another with frictional fit via a further friction surface-carrying intermediate element,
1.5 at least two means for connecting an individual transmission element stationarily with respect to the housing and/or the device for at least indirectly resetting actuating elements of non-positive coupling and/or braking arrangements being provided;
**characterised by** the following features:
1.6 the means are associated with the inner circumference of the interior space defined by the diameter, in that in the fitted state of the transmission unit they are arranged at a level which is smaller with respect to the dimensions than the dimension H5 in the height direction defined by the maximum extension of the inner contour in the fitted state,
1.7 the means comprise recesses in the transmission housing wall connected to the interior space which are constructed for guiding projections on the transmission elements complementary thereto and/or the device for at least indirectly resetting the actuating elements of the non-positive coupling and/or braking arrangements, or in which bar-shaped elements extending in the axial direction of the transmission unit are arranged, on/in which the transmission elements and/or the device for at least indirectly resetting the actuating elements can be placed or inserted,
1.8 the housing cover is free from axial force action owing to the device for at least indirectly resetting the actuating elements and/or transmission elements.

2. Transmission unit according to claim 1, **characterised in that** the cylindrical interior space has a substantially constant diameter over the entire axial extent in the fitted state.

3. Transmission unit according to either of claims 1 or 2, **characterised in that** the means are assigned to the corner regions of the housing which can be defined by the portion between the cylindrical interior space and a theoretically constructible square Q_{theoretical} with a side dimension greater than or equal to the diameter of the cylindrical interior space, the theoretically constructible square and the interior space having identical axes of symmetry.

4. Transmission unit according to claim 3, **characterised in that** the means are arranged in all four corner regions with substantially constant spacing from one another in circumferential direction of the interior space.

5. Transmission unit according to any of claims 1 to 4, **characterised in that** means for limiting and/or avoiding axial movability are associated with the individual transmission elements and/or the device for resetting the actuating elements.

6. Transmission unit according to any of claims 1 to 5, **characterised by** the following features:
6.1 comprising a mechanical transmission part and a hydrodynamic transmission part,
6.2 the cylindrical interior space of the transaussion housing has a constant diameter, as viewed in axial direction, at least over the region of the mechanical transmission part.

## Revendications

1. Unité de transmission
1.1 avec un carter de transmission ;
1.2 avec un couvercle de carter associé au carter dans le sens axial en position de montage ;
1.3 le carter de transmission présente un espace intérieur sensiblement cylindrique destiné à recevoir les éléments individuels de la transmission ;
1.4 avec un dispositif de rappel au mains indirect des éléments d'actionnement des dispositifs d'embrayage et/ou de freinage à action de forces avec au moins deux éléments dotés d'une surface de frottement, dont les surfaces de frottement peuvent être reliées par action de frottement via un autre élément intermédiaire doté d'une surface de frottement;
1.5 il est prévu au moins deux moyens destinés à relier un élément individuel de la transmission de manière fixe au carter et/ou au dispositif de rappel au moins indirect des éléments d'actionnement des dispositifs d'embrayage et/ou de freinage par action de forces;
**caractérisée par** les dispositions suivantes :
1.6 les moyens sont affectés au périmètre intérieur de l'espace intérieur décrit par le diamètre de sorte que ceux-ci soient, en ce qui concerne les dimensions en position de montage de l'unité de transmission, placés à une hauteur d'une mesure inférieure à la mesure H5 décrite par l'étendue maximale du contour intérieur dans le sens de la hauteur en position de montage;
1.7 les moyens comprennent, reliés à l'espace intérieur, des évidements réalisés dans la paroi du carter de la transmission, qui sont conçus pour le guidage de saillies complémentaires placées sur les éléments de la transmission et/ou sur le dispositif de rappel au moins indirect des éléments d'actionnement des dispositifs d'embrayage et/ou de freinage à action de forces où sont agencés des éléments en forme de barres s'étendant dans le sens axial de l'unité de transmission sur lesquels les éléments de la transmission et/ou le dispositif de rappel au moins indirect des éléments d'actionnement peuvent s'emboîter ou s'enficher ;
1.8 le couvercle de carter n'est pas affecté par l'action de forces axiales du dispositif de rappel au moins indirect des éléments d'actionnement et/ou des éléments de la transmission.

2. Unité de transmission selon la revendication 1, **caractérisée en ce que** l'espace intérieur cylindrique présente, sur toute l'étendue axiale en position de montage, un diamètre sensiblement constant.

3. Unité de transmission selon l'une des revendications 1 ou 2, **caractérisée en ce que** les moyens sont affectés dans les zones d'angles du carter, lequel peut être décrit par la zone d'intersection de l'espace intérieur cylindrique et d'un carré théoriquement traçable Q_{theorique} dont la mesure des côtés est supérieure ou égale au diamètre de l'espace intérieur cylindrique, le carré pouvant être construit théoriquement et l'espace intérieur présentant les axes de symétrie identiques.

4. Unité de transmisson selon la revendication 3, **caractérisée en ce que** les moyens sont agencés dans les quatre zones d'angle avec une distance sensiblement constante entre eux dans le sens de la périphérie de l'espace intérieur.

5. Unité de transmission selon l'une des revendications 1 à 4, **caractérisée en ce que** des moyens de limitation et/ou de suppression de la mobilité axiale sont affectés aux éléments individuels de la transmission et/ou au dispositif de rappel des éléments d'actionnement.

6. Unité de transmission selon l'une des revendications 1 à 5, **caractérisée par** les dispositions suivantes
6.1 une partie transmission mécanique et une partie transmission hydrodynamique ;
6.2 l'espace intérieur cylindrique du carter de la transmission présente, vu dans le sens axial, au moins dans la zone de la partie transmission mécanique, un diamètre constant.
